# EUROPEAN PATENT APPLICATION

(11) **EP 2 251 812 A1**
(43) Date of publication of application: **17.11.2010**
(21) Application number: 09006315.7
(22) Date of filing: 10.05.2009
(51) Int. Cl.: G06F 21/20, G06F 21/02

(54) **Transaction verification USB token**

(71) Applicant: Finetti, Mario Guido, 20149 Milano (IT)
(72) Inventor: Finetti, Mario Guido, 20149 Milano (IT)

(57) **Abstract**

For home banking Web applications, a solution is required to authenticate user's transactions when the client computer is not a trusted environment due to the malware that might be in control of the user interface.
The Transaction Verification USB Token is a USB token with cryptographic capabilities integrated with a small display and an "OK" button. It is designed to receive a short message from the home banking application including transaction details. The message is shown on token's display. If the user pushes the "OK" button, the message is signed and sent back to the home banking application. The financial transaction is confirmed only if the signed message is received and verified by the server. Otherwise, the transaction is cancelled.

## Description

**The present invention relates to an electronic device for transaction verification purposes**

The Transaction Verification USB Token (also referred to as TVUT throughout this document) is a USB token with cryptographic capabilities integrated with a small display and an "OK" button. In a home banking scenario, a token with these features is required to mitigate the security threat described below.

Let us take, for example, a Web site managed by a financial institution and providing users with the ability to perform money transfers through the Internet. Assuming that the server is properly managed by trustworthy personnel and that the connection between the client computer and the server is properly encrypted, the major security threat comes from the usage of untrusted client computers by users.

This problem was first pointed out by Bruce Schneier in 2005 [BS], but became a real issue only in December 2007, when Symantec detected a virus called "Trojan.Silentbanker" [SY]. The Silent Banker Trojan takes advantage of a home banking session initiated by a legitimate user and performs malicious transactions on his behalf. Common two-factor authentication tokens like, for example, one-time password generators, smart cards and USB crypto tokens cannot mitigate this threat.

The solution described below mitigates this threat and allows to securely perform financial transactions through a Internet Web site, even if the client computer is untrusted and possibly controlled by a malicious third party.

The Web application should generate a short summary of the transaction being requested by the user, including the beneficiary account number, the transaction ID and the transaction amount. This message needs to be transferred to the TVUT through the USB interface. The message is then shown on TVUT's diaplay, so the user can read it. The user pushes TVUT's button only if he agrees to the transaction. The TVUT then signs the message and gives the signed message back to the Web application. The Web application verifies the signed message and authorizes the transaction. Otherwise the transaction is canceled.

This document claims for the electronic Transaction Verification USB Token only. The Web application will be described as an example usage scenario.

The Transaction Verification USB token comprises:
1. A USB interface to communicate with an external and untrusted computing environment (5)
2. A small display, for example a liquid Crystal Display (LCD) (4)
3. A device for collecting user approval on the message being shown on said display, like for example a push button (3)
4. A memory, responsible for storing the keys required for the signature process (2)
5. A clock and a battery if time stamping is required (6)
6. A control unit (1) responsible for:
   a. getting a input message through the USB interface;
   b. have the input message shown on the display;
   c. sign the input message when the button is pushed;
   d. give the signed message back to the client software
      application, through the USB interface.

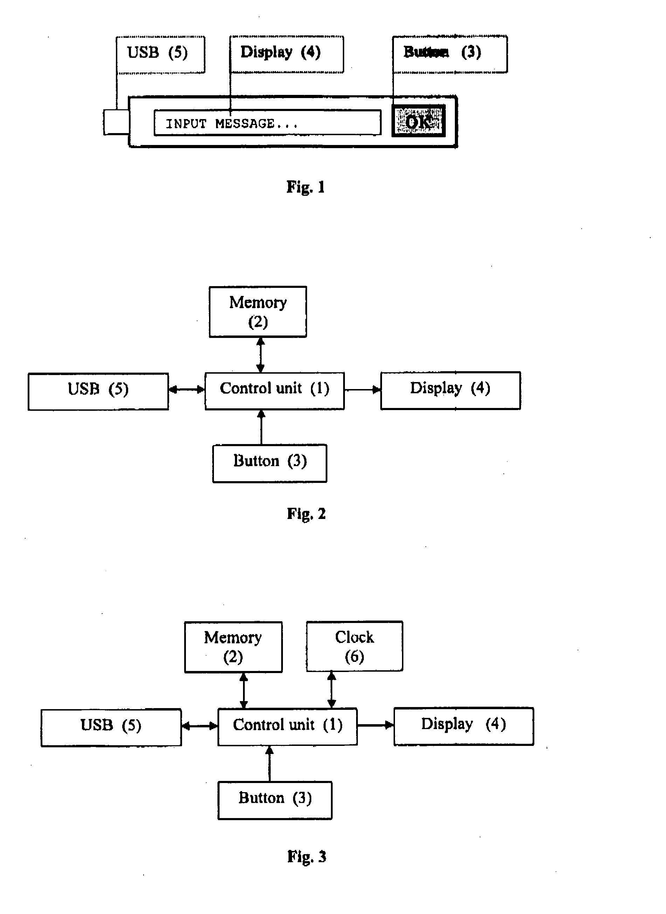

**Fig. 1** is a top view of an embodiment of the TVUT;
**Fig. 2** is a block diagram of the control system of an embodiment of the present invention;
   **Fig. 3** describes an alternative embodiment including a clock for timestamp certification.

The Transaction Verification USB Token is connected to an external and untrusted computing environment through the USB interface (5). The external computing environment (e.g. the client computer) sends the input message to the TVUT. As soon as the input message is available, it is shown on the display (4) of the TVUT. If the user pushes the TVUT's button (3), the control unit (1) applies the signature process to the input message and generates the signed message. The signed message is then sent to the mentioned external computing environment through the USB interface (5). If the user removes the TVUT without pushing the button, no message is sent back to the external computing environment. If the external computing environment sends a new message to the TVUT the first message is discarded and the new message is shown on the display. In this scenario, the TVUT relies on the USB interface for power supply.

The signed message is the result of an algorithm applied to the input message and talking a secret key as an input parameter. This process is aimed at providing the recipient of the signed message with a proof that the signed message was generated by the holder of a secret key that is supposed to be unambiguously associated with the holder of the token. Many cryptographic algorithms may be used for this purpose, including:
1. asymmetric key algorithms, like for example RSA;
2. symmetric key algorithms, like for example AES;
3. one-way hash functions, like for example SHA;
4. any combination of the above mentioned algorithms (e.g.: generate the signed message as a hash of the input message, encrypted with a private RSA key and appended to the input message itself).

As an additional and optional feature, the date and time when the signature took place could be certified in the signature process. In this scenario, the time and date returned by the token's clock (6) should be appended to the input message before applying the signature algorithm. Batteries are required to supply the clock with power when the TVUT is not connected to the external computing environment.

As an additional and optional feature, the Transaction Verification USB Token could serve as an authentication token for user authentication with the Web application. In this scenario, the Transaction Verification USB Token works exactly like the authentication tokens already available on the market. Specifically, the Transaction Verification USB Token could support any combination of the authentication methods described below.
1. The token generates a one-time password each time the user pushes the button. The one-time password is shown on token's display.
2. Using the internal clock, the token calculates a new one-time password every few seconds and show it on the display.
3. The token takes part in a SSL/TLS mutual authentication handshake, based on a public/private key pair stored in the token.
4. The token receives a personal identification number (PIN) or a password from the USB interface. The token participate in a SSL/TLS mutual authentication handshake only if the PIN / password provided is correct.

As an example usage scenario, a Web based home banking application is described below. Our example architecture is very simple: a personal computer is connected to a Web server through the Internet. The Web server is running a Web application. We assume that the Web server is a trusted environment, while the personal computer is untrusted and could be entirely controlled by a malicious third party.
1. The customer of the bank is provided with the TVUT. It is critical that the token is unambiguously associated with the user. Several solutions exist to associate an authentication token to his user, as described in [PKI].

The same applies to the TVUT.
2. The customer connects to the bank's Web site using the personal computer.
3. The user authenticates with the bank Web site using the TVUT. The TVUT takes part in a SSL/TLS handshake with bank's Web server, using its private key.
4. After successful authentication, bank's Web site allows the user to perform read-only operations, like for example reading the account summary.
5. A Web page is provided for wire transfers. The user enters the transaction details in a Web form (e.g. the beneficiary account number, the transaction amount, the beneficiary postal address, etc).
6. The user is then redirected on a transaction confirmation page including a custom ActiveX control responsible for the interaction with the TVUT. The custom ActiveX control is a piece of software downloaded from the Web server and running on the client personal computer.
7. The Web application generates a short summary of the transaction being requested by the user. The summary must include: the beneficiary account number, the transaction amount and a randomly generated transaction ID to prevent reply attacks.
8. The transaction summary is sent to the TVUT as an input message. The ActiveX control works as an intermediary between the software running on the Web server and the TVUT.
9. The transaction summary is shown on the TVUT. If the user pushes the button, the message is signed and the signed message is sent back to the ActiveX control.
10. The ActiveX control sends the signed message to the Web server wrapped in a HTTP POST request.
11. The Web server verifies that the signed message is valid and it was generated by the TVUT associated with the legitimate user. Otherwise the transaction is cancelled.
11. The Web server verifies that the signed message is valid and it was generated by the TVUT associated with the legitimate user. Otherwise the transaction is cancelled.

### References

[SY] Symantec report on Trojan.Silentbanker is available at the URL below:
http://www.symantec.com/security_response/writeup.jsp?docid=2007 -121718-1009-99
[BS] Bruce Schneier, "Two-Factor Authentication: Too Little, Too Late", Communications of the ACM, Volume n. 48, Issue n. 4, Page n. 136, published by ACM (New York, NY, USA) in April 2005
[PKI] The Internet Society, "Internet X.509 Public Key Infrastructure Certificate Policy and Certification Practices Framework (RFC 3647)", November 2003, available at URL: http;//www.ietf.org/rfc/rfc3647.txt

## Claims

1. An electronic device for operation in multiple applications comprising:
a. A USB interface (5) to communicate with an external computing environment (e.g. a client computer)
b. A small display (4) where the input message is shown
c. A device for collecting user approval on the message shown, like for example a push button (3)
d. A memory (2) responsible for storing the keys required for the cryptographic process
e. A control unit (1) responsible for the operations below:
i. get a input message from the mentioned external computing environment, through the USB interface;
ii. have the input message shown on the display;
iii. on user request, apply a cryptographic process to the input message;
iv. provide said external computing environment with the output of the cryptographic process through the USB interface.

2. An electronic device according to claim 1, further comprising a clock (6) controlled by the control unit (1). Said clock is responsible for generating a timestamp when the user pushes the button (3). The timestamp is then used by the control unit to certify the date and/or time when the output message was generated. Said certification takes place by applying a cryptographic process to the input message and to the mentioned timestamp. The external computing environment mentioned in claim 1 is then provided with the result of the cryptographic process, through the USB interface (5).

3. An electronic device according to any preceding claim further comprising a battery for autonomous power supply.
